# EUROPÄISCHE PATENTANMELDUNG

(11) **EP 3 626 953 A1**
(43) Veröffentlichungstag der Anmeldung: **25.03.2020**
(21) Anmeldenummer: 18195012.2
(22) Anmeldetag: 18.09.2018
(51) Int. Cl.: F02D 29/02, F02B 61/04, F02D 31/00, F02D 19/06, F02D 29/06, B63H 21/20

(54) **VERFAHREN ZUM BETREIBEN EINER ANTRIEBSANORDNUNG FÜR EINE WELLE SOWIE ANTRIEBSANORDNUNG**

(71) Anmelder: Winterthur Gas & Diesel AG, 8401 Winterthur (CH)
(72) Erfinder: Östreicher, Wolfgang, 8404 Winterthur (CH)
(74) Vertreter: Intellectual Property Services GmbH

(57) **Zusammenfassung**

Es wird ein Verfahren zum Betreiben einer Antriebsanordnung für eine Welle vorgeschlagen, wobei die Antriebsanordnung eine Hubkolbenbrennkraftmaschie umfasst, die als Grossmotor (2) ausgestaltet ist, sowie eine elektrische Maschine (3), welches Verfahren die folgenden Schritte umfasst:
- Vorgeben einer Solldrehzahl für die Welle (4),
- Betreiben des Grossmotors (2) an einem vorgebbaren Lastpunkt,
- Erfassen der Istdrehzahl der Welle (4),
- Vergleichen der Solldrehzahl mit der Istdrehzahl, und
- Ansteuern der elektrischen Maschine (3) zum Kompensieren einer Abweichung der Istdrehzahl von der Solldrehzahl,
wobei zumindest zeitweise Energie von der Welle in die elektrische Maschine (3) eingespeist wird, und in der elektrischen Maschine (3) in elektrische Energie umgewandelt wird. Ferner wird eine Antriebsanordnung vorgeschlagen.

## Beschreibung

Die Erfindung betrifft ein Verfahren zum Betreiben einer Antriebsanordnung für eine Welle sowie eine Antriebsanordnung gemäss dem Oberbegriff des unabhängigen Patentanspruchs der jeweiligen Kategorie, wobei die Antriebsanordnung eine Hubkolbenbrennkraftmaschie umfasst, die als Grossmotor ausgestaltet ist.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Es sind verschiedene Arten von Grossmotoren bekannt, die jeweils als Zweitakt- oder als Viertakt-Motoren ausgestaltet sein können. Unter den Aspekten des wirtschaftlichen und effizienten Betriebs, der Einhaltung von Abgasgrenzwerten und der Verfügbarkeit von Ressourcen sucht man auch nach Alternativen zum klassischerweise als Brennstoff für Grossmotoren verwendeten Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Eine ebenfalls bekannte Alternative zum reinen Betrieb mit Schweröl ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor, der auch als Multi-Fuel Grossmotor bezeichnet wird, kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt.

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoffe in demselben Motor verbrannt werden können. Diese Grossmotoren können dabei sowohl Zweitakt- als auch Viertaktmotoren sein, insbesondere auch längsgespülte Zweitakt-Grossdieselmotoren.

Insbesondere wenn Grossmotoren als Hauptantriebsaggregate für Schiffe verwendet werden, ist es häufig so, dass die Kurbelwelle des Grossmotors direkt an die Schiffsschraube bzw. den Propeller angekoppelt ist, ohne dass beispielsweise ein Getriebe dazwischen vorgesehen ist, das heisst die Drehzahl des Propellers ist immer die gleiche wie die Drehzahl des Grossmotors. Um die gewünschte Geschwindigkeit des Schiffes einzustellen, wir üblicherweise die Drehzahl des Grossmotors geregelt, das heisst, mit Hilfe einer Drehzahlregelung wird der Grossmotor auf einer konstanten Drehzahl gehalten. Um den Grossmotor auf einer konstanten Drehzahl zu halten, kann es aber durchaus sein, dass der Grossmotor an verschiedenen Lastpunkten betrieben werden muss, beispielsweise weil sich der Widerstand ändert, den der sich drehende Propeller im Wasser erfährt. So ist es zum Beispiel möglich, dass der Grossmotor für ein und dieselbe Drehzahl einmal an einem Lastpunkt betrieben werden muss, der 75% seiner Volllast beträgt, und ein anderes Mal an einem Lastpunkt, der beispielsweise nur 65% seiner Volllast entspricht.

Das heisst, wenn sich der Propeller mit konstanter Drehzahl drehen soll, ist es häufig so, dass der Lastpunkt, an welchem der Grossmotor betrieben wird, in Abhängigkeit von der Zeit geändert werden muss, um beispielsweise transiente Änderungen in den Betriebs- oder Umgebungsbedingungen auszugleichen. Das bedeutet, das für eine konstante Drehzahl benötigte Drehmoment kann durchaus zeitlich variieren.

Im Hinblick auf einen möglichst kostengünstigen, wirtschaftlichen und effizienten Betrieb des Grossmotors ist es häufig wünschenswert, den Grossmotor über einen längeren Zeitraum an einem konstant gehaltenen Lastpunkt zu betreiben. Zu diesem Zwecke sind Antriebsanordnungen bekannt, die ausser dem Grossmotor noch eine zweite Antriebsmaschine, üblicherweise einen Elektromotor, umfassen, wobei diese zweite Antriebsmaschine so ausgestaltet und angeordnet ist, dass sie ebenfalls ein antreibendes Drehmoment auf die Welle ausüben kann, welche den Grossmotor mit dem Propeller verbindet.

Der Grossmotor kann dann beispielsweise an einem konstanten Lastpunkt betrieben werden. Wenn das an diesem Lastpunkt von dem Grossmotor bereitgestellte Drehmoment dann nicht (mehr) ausreicht, um die gewünschte Drehzahl des Propellers zu erreichen, so wird der Elektromotor zugeschaltet und generiert ein zusätzliches Drehmoment, welches dann zusammen mit dem vom Grossmotor genierten Drehmoment ausreicht, um die gewünschte Drehzahl des Propellers zu realisieren. In diesem Betriebszustand wird also sowohl von dem Grossmotor als auch von dem Elektromotor Energie in die Welle eingespeist, welche den Propeller antreibt. Dabei wird der Lastpunkt des Grossmotors so gewählt, dass der Hauptbeitrag zum Drehmoment von dem Grossmotor kommt und der Elektromotor in erster Linie das zusätzliche Drehmoment bereitstellt, welches bei transienten Erhöhungen des benötigten Drehmoments für die gewünschte Drehzahl benötigt wird.

Nachteilig an diesem bekannten Verfahren ist jedoch, dass die von dem Elektromotor benötigte elektrische Energie zum Generieren des zusätzlichen Drehmoments beispielsweise an Bord eines Schiffes eine relativ kostenintensive Ressource darstellt. Daher wirkt sich der Betrieb solcher Antriebsanordnungen häufig negativ auf die Energieeffizienz aus und kann den EEDI Wert (EEDI: Energy Efficiency Design Index) des Schiffes bzw. der Antriebsanordnung verschlechtern.

Ausgehend von diesem Stand der Technik ist es daher eine Aufgabe der Erfindung, ein Verfahren zum Betreiben einer Antriebsanordnung für eine Welle vorzuschlagen, wobei die Antriebsanordnung eine als Grossmotor ausgestaltete Hubkolbenbrennkraftmaschine sowie eine elektrische Maschine umfasst, welches Verfahren einen möglichst effizienten und wirtschaftlichen Betrieb der Antriebsanordnung ermöglicht. Ferner ist es eine Aufgabe der Erfindung, eine entsprechende Antriebsanordnung vorzuschlagen, welche mit einem solchen Verfahren betrieben werden kann.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zum Betreiben einer Antriebsanordnung für eine Welle vorgeschlagen, wobei die Antriebsanordnung eine Hubkolbenbrennkraftmaschie umfasst, die als Grossmotor ausgestaltet ist, sowie eine elektrische Maschine, welches Verfahren die folgenden Schritte umfasst:
- Vorgeben einer Solldrehzahl für die Welle,
- Betreiben des Grossmotors an einem vorgebbaren Lastpunkt,
- Erfassen der Istdrehzahl der Welle,
- Vergleichen der Solldrehzahl mit der Istdrehzahl, und
- Ansteuern der elektrischen Maschine zum Kompensieren einer Abweichung der Istdrehzahl von der Solldrehzahl,
wobei zumindest zeitweise Energie von der Welle in die elektrische Maschine eingespeist wird, und in der elektrischen Maschine in elektrische Energie umgewandelt wird.

Dadurch, dass der Grossmotor für eine gewünschte Solldrehzahl an einem vorgebbaren und vorzugsweise konstanten Lastpunkt betrieben wird, kann der Grossmotor besonders effizient, wirtschaftlich und verschleissarm betrieben werden. Da zusätzlich zumindest zeitweise Energie von der Welle in die elektrische Maschine eingespeist wird und in der elektrischen Maschine in elektrische Energie umgewandelt wird, kann die Antriebsanordnung insbesondere mit einer hohen Energieeffizienz betrieben werden, denn zumindest zeitweise wird ein Teil der von dem Grossmotor generierten Energie in elektrische Energie umgewandelt, welche dann gespeichert oder für andere Zwecke verwendet werden kann. Da der Grossmotor, beispielsweise ein längsgespülter Zweitakt-Grossdieselmotor, üblicherweise eine höhere Energieeffizienz hat und/oder Energie kostengünstiger bereitstellen kann als viele andere Aggregate, ist es unter den Aspekten der Wirtschaftlichkeit und der Energieeffizienz vorteilhaft, zumindest zeitweise einen Teil der von dem Grossmotor generierten Energie in elektrische Energie umzuwandeln.

Vorzugsweise wird an dem vorgebbaren Lastpunkt, bei welchem der Grossmotor betrieben wird, die Abweichung der Istdrehzahl von der Solldrehzahl nur mittels der elektrischen Maschine kompensiert. Das bedeutet für eine gewünschte Solldrehzahl wird der Grossmotor an einem konstant gehaltenen Lastpunkt betrieben und die Regelung der Drehzahl der Welle erfolgt nur über die elektrische Maschine. Insbesondere werden somit transiente Änderungen in dem für die Solldrehzahl momentan benötigten Drehmoment nur mit der elektrischen Maschine kompensiert. Für eine vorgegebene Solldrehzahl erfolgt also die Drehzahlregelung nicht an dem Grossmotor sondern nur mittels der elektrischen Maschine.

Gemäss einer ersten bevorzugten Ausführungsform wird der Lastpunkt des Grossmotors so festgelegt, dass das vom Grossmotor generierte Drehmoment grösser ist als das für die Solldrehzahl benötigte Drehmoment. Für eine gewünschte Solldrehzahl der Welle wird also der Lastpunkt, an welchem der Grossmotor betrieben wird, so gewählt, dass das von dem Grossmotor generierte Drehmoment - auch unter Berücksichtigung transienter Änderungen des benötigten Drehmoments - stets grösser ist als dasjenige Drehmoment, welches für das Erreichen bzw. das Einhalten der Solldrehzahl benötigt wird. Der Grossmotor wird also an einem solchen Lastpunkt betrieben, , dass ständig Energie aus der rotierenden Welle in die elektrische Maschine eingespeist werden kann. Bei dieser Ausführungsform wird die elektrische Maschine nur in einem Generatorbetrieb betrieben oder die elektrische Maschine ist als Generator ausgestaltet.

Es ist eine bevorzugte Massnahme, dass die von der elektrischen Maschine generierte elektrische Energie einer Speichereinheit oder einem Versorgungsnetz zugeführt wird. So kann die von der elektrischen Maschine generierte elektrische Energie gespeichert werden und steht dann für die Versorgung von Verbrauchern zur Verfügung oder die elektrische Energie wird direkt solchen Verbrauchern zugeführt.

Eine weitere bevorzugte Massnahme besteht darin, dass die Drehzahl der Welle mittels der elektrischen Energie geregelt wird, die aus der elektrischen Maschine abgeführt wird. Die Regelung der Drehzahl erfolgt dann also derart, dass die elektrische Energie, welche der elektrischen Maschine sekundärseitig entzogen wird, so geregelt wird, dass die Differenz aus dem von dem Grossmotor generierten Drehmoment und dem von der elektrischen Maschine aufgenommenen Drehmoment, demjenigen Drehmoment entspricht, dass für die Realisierung der Solldrehzahl jeweils benötigt wird.

Gemäss einer zweiten bevorzugten Ausführungsform wird zumindest zeitweise Energie von der elektrischen Maschine in die Welle eingespeist, um die Drehzahl der Welle zu erhalten. Bei dieser zweiten Ausführungsform wird also zeitweise Energie von der Welle in die elektrische Maschine eingespeist, und zeitweise wird Energie von der elektrischen Maschine in die Welle eingespeist, um deren Drehzahl zu erhalten. Die elektrische Maschine wird also bedarfsweise in einem Generatorbetrieb betrieben, bei welchem die elektrische Maschine elektrische Energie erzeugt, oder in einem Motorbetrieb, bei welchem die elektrische Maschine ein Drehmoment zum Antreiben der Welle erzeugt. Bei dieser Ausführungsform kann der konstante Lastpunkt, an welchem der Grossmotor betrieben wird, beispielsweise so festgelegt werden, dass der Grossmotor ein Drehmoment erzeugt, welches unter normalen oder normierten Bedingungen demjenigen Drehmoment entspricht, welches zur Realisierung der Solldrehzahl benötigt wird. Kommt es nun durch transiente Änderungen in den Betriebs- oder Umgebungsbedingungen zu Abweichungen des momentan benötigten Drehmoments, so können diese Abweichungen durch die elektrische Maschine kompensiert werden, indem die elektrische Maschine der Welle entweder Energie entzieht oder ein zusätzliches Drehmoment auf die Welle ausübt.

Vorzugsweise wird die elektrische Maschine derart angesteuert, dass von der Welle Energie in die elektrische Maschine eingespeist wird, falls die Istdrehzahl der Welle grösser ist als die Solldrehzahl, und dass von der elektrischen Maschine Energie in die Welle eingespeist wird, falls die Istdrehzahl der Welle kleiner ist als die Solldrehzahl.

Durch die Erfindung wird ferner eine Antriebsanordnung vorgeschlagen, umfassend eine Welle, eine Hubkolbenbrennkraftmaschie, die als Grossmotor ausgestaltet ist, eine elektrische Maschine, und eine Ansteuereinheit, wobei der Grossmotor antriebsverbunden mit der Welle ist, und wobei die Ansteuereinheit derart ausgestaltet ist, dass sie die Antriebsanordnung nach einem erfindungsgemässen Verfahren betreibt.

Gemäss einer Ausführungsform ist die elektrische Maschine derart ausgestaltet, dass sie von einem Generatorbetrieb in einen Motorbetrieb umschaltbar ist und umgekehrt.

In einem ersten Ausführungsbeispiel ist die elektrische Maschine über ein Getriebe mit der Welle verbunden.

In einem zweiten Ausführungsbeispiel ist die elektrische Maschine unmittelbar auf der Welle angeordnet, das heisst zwischen der elektrischen Maschine und der Welle ist kein Getriebe vorgesehen, welches die elektrische Maschine an die Welle koppelt.

Gemäss einer vorteilhaften Ausgestaltung hat die Antriebsanordnung eine Speichereinheit für elektrische Energie, wobei die Speichereinheit mit der elektrischen Maschine verbunden ist.

Der Grossmotor kann beispielsweise als längsgespülter Grossmotor ausgestaltet sein.

In einer bevorzugten Ausgestaltung ist der Grossmotor als längsgespülter Zweitakt-Grossdieselmotor ausgestaltet.

Insbesondere kann der Grossmotor der Antriebsanordnung auch als Dual-Fuel Grossdieselmotor ausgestaltet sein, der in einem Flüssigmodus betreibbar ist, in welchem ein flüssiger Brennstoff zur Verbrennung in einen Brennraum eingebracht wird, und der ferner in einem Gasmodus betreibbar ist, in welchem ein Gas als Brennstoff in den Brennraum eingebracht wird.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Darstellung eines ersten Ausführungsbeispiels einer erfindungsgemässen Antriebsanordnung,
- Fig. 2:: eine schematische Darstellung eines zweiten Ausführungsbeispiels einer erfindungsgemässen Antriebsanordnung,
- Fig. 3:: ein Diagramm zur Erläuterung einer ersten Ausführungsform eines erfindungsgemässen Verfahrens, und
- Fig. 4:: ein Diagramm zur Erläuterung einer zweiten Ausführungsform eines erfindungsgemässen Verfahrens.

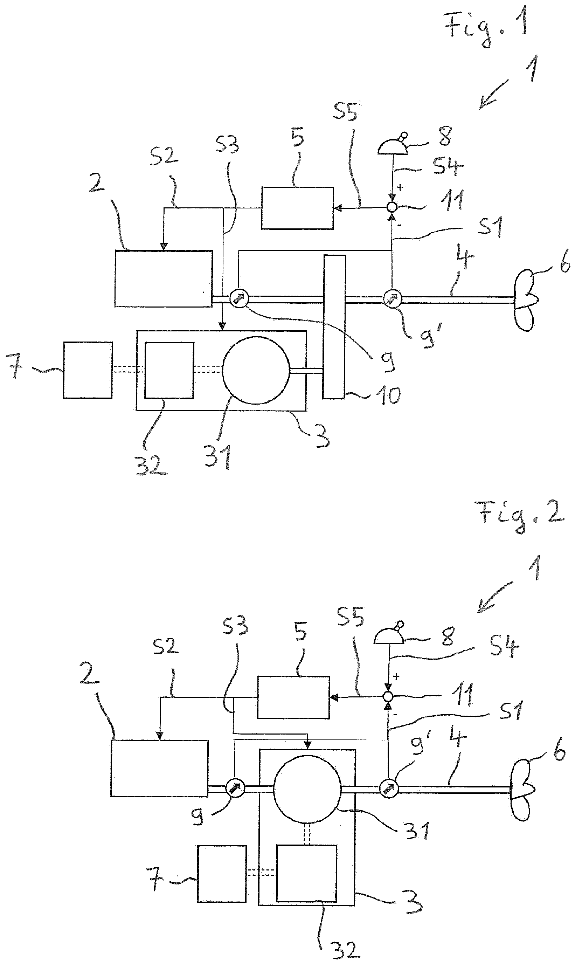

Fig. 1 zeigt in einer schematischen Darstellung ein erstes Ausführungsbeispiel einer erfindungsgemässen Antriebsanordnung, welche gesamthaft mit dem Bezugszeichen 1 bezeichnet ist. Die Antriebsanordnung umfasst eine Hubkolbenbrennkraftmaschine 2, welche als Grossmotor 2 ausgestaltet ist, eine elektrische Maschine 3, eine Welle 4, welche angetrieben wird, und eine Ansteuereinheit 5, mit welcher der Grossmotor 2 und die elektrische Maschine 3 angesteuert werden.

Der nicht weiter im Detail dargestellte Grossmotor 2 umfasst in an sich bekannter Weise mindestens einen aber üblicherweise eine Mehrzahl von Zylindern, wobei in jedem Zylinder ein Kolben vorgesehen ist, welcher zwischen einem oberen Umkehrpunkt und einem unteren Umkehrpunkt hin und her bewegbar angeordnet ist. Alle Kolben sind mit einer Kurbelwelle verbunden, sodass die Kolbenbewegung die Kurbelwelle in Rotation versetzt.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossmotors jeweils einen Innendurchmesser (Bohrung), der mindestens etwa 200 mm beträgt.

Der Grossmotor kann als Viertakt- oder als Zweitakt-Motor ausgestaltet sein. Insbesondere kann der Grossmotor als Grossdieselmotor ausgestaltet sein, speziell als längsgespülter Zweitakt-Grossdieselmotor. Mit dem Begriff "Grossdieselmotor" sind dabei solche Grossmotoren gemeint, die in einem Dieselbetrieb betreibbar sind, bei welchem die Verbrennung des Brennstoffs üblicherweise nach dem Prinzip der Selbstzündung erfolgt. Im Rahmen dieser Anmeldung sind mit dem Begriff "Grossdieselmotor" auch solche Grossmotoren gemeint, die ausser im Dieselbetrieb, alternativ auch in einem Ottobetrieb betrieben werden können. Im Ottobetrieb erfolgt die Verbrennung typischerweise nach dem Prinzip der Fremdzündung des Brennstoffs. Auch ist es möglich, dass der Grossdieselmotor in Mischformen aus dem Dieselbetrieb und dem Ottobetrieb betrieben werden kann.

Bei der folgenden Beschreibung der Erfindung wird mit beispielhaftem Charakter auf den für die Praxis wichtigen Fall eines Grossmotors Bezug genommen, der als längsgespülter Zweitakt-Grossdieselmotor ausgestaltet ist, und der als Hauptantriebsaggregat eines Schiffes verwendet wird. Dieser Grossdieselmotor ist vorzugsweise als Dual-Fuel Grossdieselmotor ausgestaltet, sodass er mit zwei unterschiedlichen Brennstoffen betreibbar ist, nämlich mit einem flüssigen Brennstoff wie Schweröl oder Marinediesel, und mit einem gasförmigen Brennstoff, z. B. Erdgas. Der Dual-Fuel Grossdieselmotor kann während des Betriebs vom Verbrennen des ersten Brennstoffs auf das Verbrennen des zweiten Brennstoffs umgeschaltet werden und umgekehrt. Er ist also in einem Flüssigmodus betreibbar, in welchem ein flüssiger Brennstoff zur Verbrennung in den Brennraum eingebracht wird, und ferner in einem Gasmodus, in welchem ein Gas als Brennstoff in den Brennraum eingebracht wir. Im Flüssigmodus wird der Grossmotor 2 mit Selbstzündung des Brennstoffs betrieben (Dieselbetrieb), und im Gasmodus wird der Grossmotor 2 mit Fremdzündung des Brennstoffs betrieben (Ottobetrieb). Im Gasmodus wird der Dual-Fuel-Motor vorzugsweise nach einem Niederdruckverfahren betrieben. Die Fremdzündung des Luft-Gas-Gemisches im Zylinder erfolgt im Gasmodus vorzugsweise durch die Einspritzung einer kleinen Menge selbstzündenden Brennstoffs, z. B. Schweröl oder Diesel, welche dann das Luft-Gas-Gemisch fremdzündet.

Es versteht sich, dass die Erfindung nicht auf diesen Typ von Grossmotor und auf diese Verwendung beschränkt ist, sondern Grossmotoren im Allgemeinen betrifft. Dabei ist es auch möglich, dass der Grossmotor nur für die Verbrennung eines einzigen Brennstoffs, beispielsweise Schweröl, Marinediesel oder Diesel, oder eines Gases wie Erdgas ausgestaltet ist. Der Grossmotor kann also auch als Gasmotor ausgestaltet sein. Auch ist es möglich, dass der Grossmotor als Multi-Fuel Grossmotor ausgestaltet ist, der mit einem ersten Brennstoff betrieben werden kann, und der mit mindestens einem zweiten Brennstoff betrieben werden kann, der von dem ersten Brennstoff verschieden ist. Natürlich kann der Grossmotor auch für die Verbrennung von mehr als zwei Brennstoffen ausgestaltet sein.

Bei der Anwendung des Grossmotors 2 als Hauptantriebsaggregat eines Schiffes ist die anzutreibende Welle 4 üblicherweise identisch mit der Kurbelwelle des Grossmotors 2 oder starr und ohne Getriebe mit der Kurbelwelle des Grossmotors 2 verbunden. An dem dem Grossmotor 2 abgewandten Ende der Welle 4 ist ein Propeller 6 vorgesehen, welcher das Schiff antreibt.

Die elektrische Maschine 3 ist vorzugsweise derart ausgestaltet, dass sie wahlweise in einem Generatorbetrieb betreibbar ist, in welchem der elektrischen Maschine 3 mechanische Energie zugeführt wird, und diese in elektrische Energie umgewandelt wird, oder in einem Motorbetrieb, in welchem der elektrischen Maschine 3 elektrische Energie zugeführt wird, und diese in mechanische Energie, insbesondere in Bewegungsenergie, umgewandelt wird.

Es ist ferner ein Getriebe 10 vorgesehen, über welches die elektrische Maschine 3 mit der Welle 4 verbunden ist. Das Getriebe 10 ist derart ausgestaltet, dass die elektrische Maschine 3 in den Antriebsstrang eingekoppelt werden kann und auch aus dem Antriebsstrang ausgekoppelt werden kann. Ist die elektrische Maschine 3 eingekoppelt, so besteht eine Wirkverbindung zwischen der Welle 4 und der elektrischen Maschine 3, sodass ein Drehmoment von der Welle 4 auf die elektrische Maschine 3 übertragbar ist oder umgekehrt ein Drehmoment von der elektrischen Maschine 3 auf die Welle 4. Ist die elektrische Maschine 3 ausgekoppelt, so besteht keine Wirkverbindung zwischen der elektrischen Maschine 3 und der Welle 4. Bei dieser Ausgestaltung kann also wahlweise eine Wirkverbindung zum Übertragen von Drehmomenten zwischen der Welle 4 und der elektrischen Maschine 3 hergestellt oder gelöst werden. Das Getriebe 10 ist zwischen dem Grossmotor 2 und dem Propeller 6 an der Welle 4 angeordnet, sodass die elektrische Maschine 3 zwischen dem Grossmotor 2 und dem Propeller 6 in den Antriebsstrang eingekoppelt werden kann.

Je nach Ausführungsform des erfindungsgemässen Verfahrens kann es auch ausreichend sein, wenn die elektrische Maschine 3 nur im Generatorbetrieb betreibbar ist oder als Generator ausgestaltet ist.

Die elektrische Maschine 3 umfasst eine Motor/Generator Einheit 31, welche Bewegungsenergie bzw. mechanische Energie in elektrische Energie umwandelt oder umgekehrt elektrische Energie in Bewegungsenergie. Die elektrische Maschine 3 umfasst ferner einen Umsetzer 32, der zumindest einen Gleichrichter umfasst, mit welchem der von der Motor/Generator Einheit 31 erzeugte Wechselstrom gleichgerichtet werden kann, also in Gleichstrom gewandelt werden kann. Der Umsetzer 32 kann ferner einen Wechselrichter umfassen, mit welchem ein der elektrischen Maschine 3 zugeführter Gleichstrom in einen Wechselstrom umgewandelt werden kann.

Ferner ist eine mit der elektrischen Maschine 3 verbundene Speichereinheit 7 vorgesehen, beispielsweise ein Akkumulator, in welcher die von der elektrischen Maschine 3 generierte elektrische Energie gespeichert werden kann. Umgekehrt ist es auch möglich, beispielsweise für den Motorbetrieb der elektrischen Maschine 3, der Speichereinheit 7 elektrische Energie zu entnehmen und diese der elektrischen Maschine 3 zuzuführen.

Die Speichereinheit 7 kann ferner mit einem Versorgungsnetz, beispielsweise dem Bordnetz eines Schiffes, verbunden sein, um in dieses Versorgungsnetz elektrische Energie für Verbraucher einzuspeisen.

Auch ist es möglich, parallel zu der Speichereinheit 7 oder alternativ zu der Speichereinheit 7 direkt von der elektrischen Maschine 3 die generierte elektrische Energie einem Versorgungsnetz, beispielsweise dem Bordnetz eines Schiffes, zuzuführen.

Die Ansteuereinheit 5 ist sowohl mit dem Grossmotor 2 als auch mit der elektrischen Maschine 3 signalverbunden. Beispielsweise sind eine erste Signalleitung S2 und eine zweite Signalleitung S3 vorgesehen, wobei die erste Signalleitung S2 die Ansteuereinheit 5 mit dem Grossmotor 2 verbindet und die zweite Signalleitung S3 die Ansteuereinheit 5 mit der elektrischen Maschine.

Weiterhin ist ein Kontrollvorrichtung 8 vorgesehen, mit welcher eine Solldrehzahl der Welle 4 vorgebbar ist. Diese Kontrollvorrichtung 8 kann beispielsweise ein Kontrollhebel sein, mit welcher die gewünschte Drehzahl oder die gewünschte Geschwindigkeit des Schiffes manuell einstellbar ist.

Ferner ist mindestens ein Sensor 9 oder 9' vorgesehen, mit welchem die aktuelle Drehzahl der Welle 4 ermittelbar ist. Dabei kann der Sensor 9 bzw. 9' direkt als Drehzahlmesser ausgestaltet sein oder auch als ein Sensor, aus dessen Messsignal die Drehzahl der Welle 4 ermittelbar ist. Der Sensor 9 kann beispielsweise zum Erfassen der Drehzahl der Welle 4 zwischen dem Grossmotor 2 und dem Getriebe 10 angeordnet sein, oder der Sensor 9' kann beispielsweise zum Erfassen der Drehzahl der Welle 4 zwischen dem Getriebe 10 und dem Propeller 6 angeordnet sein.

Es versteht sich, dass es ausreichend ist, wenn entweder der Sensor 9 oder der Sensor 9' vorgesehen ist. Natürlich können auch beide Sensoren 9, 9' vorgesehen sein.

Der Sensor 9 oder 9' oder die Sensoren 9 und 9' sind mit einem Vergleicher 11 signalverbunden, beispielsweise über eine Signalleitung S1. Die Kontrollvorrichtung 8 ist ebenfalls mit dem Vergleicher 11 signalverbunden, beispielsweise über eine weitere Signalleitung S4.

Mittels der Kontrollvorrichtung 8 ist eine Solldrehzahl für die Welle 4 vorgebbar. Mittels des Sensors 9 oder 9' ist die Istdrehzahl der Welle 4, also die jeweils aktuelle Drehzahl, mit welcher die Welle 4 rotiert, erfassbar. Der Vergleicher 11 vergleicht die Istdrehzahl der Welle 4 mit der Solldrehzahl der Welle 4 und übermittelt das Ergebnis über eine Signalverbindung S5 an die Ansteuereinheit 5. Die Ansteuereinheit 5 ist derart ausgestaltet, dass sie die Antriebsanordnung 1 nach einem erfindungsgemässen Verfahren betreibt, welches noch genauer beschrieben wird.

Der Vergleicher 11 kann natürlich in die Ansteuereinheit 5 integriert sein.

Fig. 2 zeigt eine schematische Darstellung eines zweiten Ausführungsbeispiels einer erfindungsgemässen Antriebsanordnung 1. Im Folgenden wird nur auf die Unterschiede zum ersten Ausführungsbeispiel eingegangen. Ansonsten gelten die Erläuterungen bezüglich des ersten Ausführungsbeispiels in sinngemäss gleicher Weise auch für das zweite Ausführungsbeispiel. Gleiche oder von der Funktion her gleichwertige Komponenten sind bei dem zweiten Ausführungsbeispiels mit den gleichen Bezugszeichen bezeichnet wie bei dem ersten Ausführungsbeispiel.

Im Unterschied zum ersten Ausführungsbeispiel ist bei dem zweiten Ausführungsbeispiel der erfindungsgemässen Antriebsanordnung 1 kein Getriebe 10 vorgesehen, mit welchem die elektrische Maschine 3 in den Antriebsstrang einkoppelbar bzw. auskoppelbar ist. Bei dem zweiten Ausführungsbeispiel ist die elektrische Maschine 3 unmittelbar auf der Welle 4 angeordnet, also ohne dass zwischen der elektrischen Maschine 3 und der Welle 4 ein Getriebe oder eine andere Koppelungsvorrichtung vorgesehen ist. Folglich ist die elektrische Maschine 3 ständig wirkverbunden mit der Welle 4, ohne dass diese Wirkverbindung im Betrieb lösbar ist. Die elektrische Maschine 3 ist zwischen dem Grossmotor 2 und dem Propeller 6 auf der Welle 4 angeordnet.

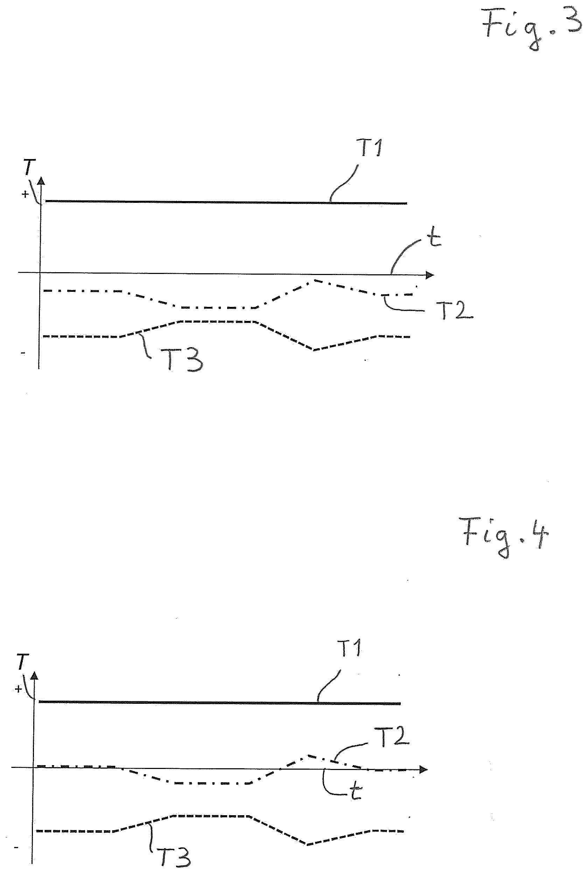

Im Folgenden wird nun das erfindungsgemässe Verfahren zum Betreiben einer Antriebsanordnung 1 anhand von bevorzugten Ausführungsformen und unter Bezugnahme auf die Fig. 3 und die Fig. 4 erläutert. Dabei kann die Antriebsanordnung 1 entweder gemäss dem ersten Ausführungsbeispiel (Fig. 1) oder gemäss dem zweiten Ausführungsbeispiel (Fig. 2) ausgestaltet sein.

Bei dem erfindungsgemässen Verfahren zum Betreiben der Antriebsanordnung 1 wird zunächst eine Solldrehzahl für die Welle 4 vorgegeben. Für diese Solldrehzahl wird der Grossmotor 2 an einem vorgebbaren und vorzugsweise konstanten Lastpunkt betrieben. Dieser vorzugsweise konstante Lastpunkt ist beispielsweise ein prozentualer Wert, der auf die Volllast des Grossmotors 2 bezogen ist, wobei die Volllast einer Last von 100% entspricht. Die Istdrehzahl der Welle wird erfasst, beispielsweise mittels des Sensors 9 und/oder des Sensors 9'. Die Solldrehzahl wird mit der Istdrehzahl verglichen und die elektrische Maschine 3 wird zum Kompensieren einer Abweichung der Istdrehzahl von der Solldrehzahl angesteuert, wobei zumindest zeitweise Energie von der Welle 4 in die elektrische Maschine 3 eingespeist wird, und in der elektrischen Maschine 3 in elektrische Energie umgewandelt wird, die dann der Speichereinheit 7 oder auch einem Versorgungsnetz zugeführt werden kann.

Ein wesentlicher Aspekt ist dabei, dass der Grossmotor 2 für die vorgegebene Solldrehzahl der Welle 4 an einem vorgebbaren und vorzugsweise konstanten Lastpunkt betrieben wird, und zumindest zeitweise Energie von der Welle in die elektrische Maschine eingespeist wird.

Die Regelung der Drehzahl der Welle 4 erfolgt also für eine vorgegebene Solldrehzahl nicht über eine Änderung des Lastpunkts an welchem der Grossmotor betrieben wird, sondern mittels der elektrischen Maschine 3.

Wenn der Grossmotor 2 an einem konstanten Lastpunkt betrieben wird, so bedeutet dies insbesondere, dass die pro Arbeitszyklus des Grossmotors 2 in die Zylinder eingespritzte Menge an Brennstoff konstant gehalten wird, dass der Beginn und das Ende der Einspritzung bezogen auf den Arbeitszyklus konstant gehalten wird, und dass die Betätigung der Auslassventile (Öffnen und Schliessen der Auslassventile) nicht verändert wird.

Im Folgenden wird nun anhand der Fig. 3 eine erste Ausführungsform des erfindungsgemässen Verfahrens erläutert. In Fig. 3 ist auf der vertikalen Achse T das Drehmoment aufgetragen und auf der horizontalen Achse t ist die Zeit aufgetragen. Drehmomente, die darstellungsgemäss oberhalb der horizontalen Achse t liegen, sind bezogen auf die Welle 4 positive Drehmomente, das heisst Drehmomente, die auf die Welle 4 ausgeübt werden bzw. in die Welle 4 eingespeist werden. Drehmomente, die darstellungsgemäss unterhalb der horizontalen Achse t liegen, sind bezogen auf die Welle 4 negative Drehmomente, das heisst Drehmomente, die von der Welle 4 ausgeübt werden bzw. aus der Welle 4 abgeführt werden. Ein positives Drehmoment bedeutet also, dass Energie in die Welle 4 eingespeist wird, und ein negatives Drehmoment bedeutet, dass Energie, insbesondere Rotations - oder Bewegungsenergie, aus der Welle 4 abgeführt wird, das heisst, dass die Welle 4 Arbeit leistet. Es versteht sich, dass die Summe aller positiven und aller negativen Drehmomente stets Null ergeben muss.

In Fig. 3 bezeichnet die Kurve T1 das von dem Grossmotor 2 bereitgestellte Drehmoment, die Kurve T2 bezeichnet das von der elektrischen Maschine aufgenommene bzw. abgegebene Drehmoment, und die Kurve T3 bezeichnet das von dem Propeller 6 aufgenommene bzw. benötigte Drehmoment zum Erreichen bzw. Halten der Solldrehzahl.

Bei dieser Ausführungsform wird der konstante Lastpunkt, an welchem der Grossmotor 2 betrieben wird, so festgelegt, dass der Welle 4 stets Energie entnommen werden muss, um die Istdrehzahl auf die Solldrehzahl einzuregeln. Das heisst, der Grossmotor 2 wird bewusst an einem solch hohen konstanten Lastpunkt betrieben, dass das von dem Grossmotor 2 generierte Drehmoment T1 auch unter Berücksichtigung transienter Änderungen des von dem Propeller 6 benötigten Drehmoments T3 immer grösser ist als das von dem Propeller 6 zum Erreichen der Solldrehzahl benötigte Drehmoment T3.

Dies ist in Fig. 3 veranschaulicht. Die Kurve T3 zeigt den zeitlichen Verlauf des Drehmoments, welches von dem Propeller 6 beziehungsweise der Welle 4 benötigt wird, um die vorgegebene Solldrehzahl zu erreichen. Dieses Drehmoment T3 kann zeitlich variieren aufgrund transienter Änderungen in den Betriebsbedingungen oder den Umgebungsbedingungen. Erfährt der Propeller 6 beispielsweise einen grösseren Widerstand im Wasser, so wird ein betragsmässig grösseres Drehmoment T3 benötigt, um die Solldrehzahl zu realisieren, als wenn der Propeller 6 einen kleineren Widerstand im Wasser erfährt. Diese transienten Schwankungen im benötigten Drehmoment zeigt die Kurve T3 in Fig. 3.

Da der Grossmotor 2 an einem konstanten Lastpunkt betrieben wird, ist das von dem Grossmotor 2 generierte Drehmoment T1 zeitlich konstant. Dabei wird der konstante Lastpunkt so festgelegt, dass das von dem Grossmotor 2 bereitgestellte, zeitlich konstante Drehmoment T1 betragsmässig immer grösser ist als das von dem Propeller 6 benötigte Drehmoment T3.

Die Ansteuereinheit 5 steuert nun die elektrische Maschine 3 so an, dass sie das Drehmoment T2 von der Welle 4 aufnimmt, welches dem Unterschied zwischen dem vom Grossmotor 2 bereitgestellten konstanten Drehmoment T1 und dem von der Welle 4 bzw. dem Propeller 6 momentan benötigten Drehmoment T3 entspricht. Da das Drehmoment T1 betragsmässig immer grösser ist als das Drehmoment T3, ist das Drehmoment T2 in Fig. 3 immer negativ, das heisst es wird immer Energie von der Welle 4 in die elektrische Maschine 3 eingespeist.

Folglich arbeitet die elektrische Maschine 3 bei dieser Ausführungsform immer im Generatorbetrieb, in welchem die elektrische Maschine 3 Bewegungsenergie von der Welle 4 aufnimmt und diese Bewegungsenergie in elektrische Energie umwandelt.

Die Regelung auf eine konstante Drehzahl der Welle 4 erfolgt hier also nur mittels der elektrischen Maschine 3, nämlich über die Energie, welche der rotierenden Welle 4 entnommen und der elektrischen Maschine 3 zugeführt wird.

Die Regelung der Drehzahl der Welle 4 mittels der elektrischen Maschine 3 erfolgt dabei, indem die Ansteuereinheit 5 die elektrische Energie regelt, welche der elektrischen Maschine 3 im Generatorbetrieb sekundärseitig entnommen und beispielsweise der Speichereinheit 7 zugeführt wird. Die elektrische Energie, welche der elektrischen Maschine 3 entnommen wird, kann beispielsweise über eine sekundärseitige Strom- oder Spannungsregelung erfolgen.

Fig. 4 veranschaulicht eine zweite Ausführungsform des erfindungsgemässen Verfahrens zum Betreiben der Antriebsanordnung 1 in einer zu Fig. 3 analogen Darstellung. Insbesondere haben die Bezugszeichen in Fig. 4 die gleiche Bedeutung wie sie im Zusammenhang mit Fig. 3 bereits erläutert wurden.

Bei der zweiten Ausführungsform ist die elektrische Maschine 3 so ausgestaltet, dass sie wahlweise in einem Generatorbetrieb zur Erzeugung elektrischer Energie betreibbar ist und in einem Motorbetrieb, in welchem die elektrische Maschine 3 elektrische Energie aufnimmt und diese in mechanische Energie, insbesondere in Bewegungsenergie umwandelt.

Auch bei der zweiten Ausführungsform wird der Grossmotor 2 für eine vorgegebene Solldrehzahl an einem konstanten Lastpunkt betrieben, sodass das von dem Grossmotor generierte Drehmoment T1 zeitlich konstant ist, wie dies in Fig. 4 dargestellt ist.

Im Unterschied zu der ersten Ausführungsform wird bei der zweiten Ausführungsform der konstante Lastpunkt, an welchem der Grossmotor 2 betrieben wird, so festgelegt, dass das von dem Propeller 6 bzw. der Welle 4 zum Erreichen der Solldrehzahl benötigte Drehmoment T3 betragsmässig zeitweise grösser und zeitweise kleiner sein kann als das von dem Grossmotor generierte Drehmoment T1. Dazu kann der konstante Lastpunkt beispielsweise so festgelegt werden, dass der Grossmotor 2 ein Drehmoment generiert, welches im zeitlichen Mittel demjenigen Drehmoment entspricht, welches für die vorgegebene Solldrehzahl benötigt wird. So kann der konstante Lastpunkt beispielsweise so festgelegt werden, dass das von dem Grossmotor 2 generierte Drehmoment T1, demjenigen Drehmoment entspricht, welches unter normierten oder normalen Betriebsbedingungen benötigt wird, um die vorgegebene Solldrehzahl zu realisieren.

Auch bei der zweiten Ausführungsform wird die Abweichung der Istdrehzahl von der Solldrehzahl der Welle nur über die elektrische Maschine 3 kompensiert. Das heisst, auch bei der zweiten Ausführungsform erfolgt die Regelung der Drehzahl nur mittels der elektrischen Maschine 3.

Aufgrund des Signals, welche die Ansteuereinheit 5 von dem Vergleicher 11 erhält, erkennt die Ansteuereinheit 5, ob die Solldrehzahl grösser oder kleiner ist als die Istdrehzahl, oder ob die Solldrehzahl gleich der Istdrehzahl ist. Solange die Istdrehzahl gleich der Solldrehzahl ist, braucht die Ansteuereinheit 5 keine Änderungen vorzunehmen. Die Welle 4 dreht sich mit der vorgegebenen Solldrehzahl.

Falls die Istdrehzahl der Welle 4 grösser ist als die Solldrehzahl, so steuert die Ansteuereinheit 5 die elektrische Maschine 3 derart an, dass von der Welle 4 Energie oder mehr Energie in die elektrische Maschine 3 eingespeist wird (Generatorbetrieb), sodass die Istdrehzahl auf die Solldrehzahl eingeregelt wird.

Falls die Istdrehzahl der Welle 4 kleiner ist als die Solldrehzahl, so steuert die Ansteuereinheit 5 die elektrische Maschine 3 derart an, dass von der elektrischen Maschine 3 Energie oder mehr Energie in die Welle 4 eingespeist wird, um die Istdrehzahl der Welle 4 zu erhöhen (Motorbetrieb), sodass die Istdrehzahl auf die Solldrehzahl eingeregelt wird.

Die Ansteuereinheit 5 schaltet also bedarfsweise die elektrische Maschine 3 zwischen dem Generatorbetrieb und dem Motorbetrieb um. Falls das von dem Grossmotor 2 generierte konstante Drehmoment T1 zu gross ist, schaltet die Ansteuereinheit 5 die elektrische Maschine 3 in den Generatorbetrieb, und falls das von dem Grossmotor 2 generierte Drehmoment T1 für das Erreichen der Solldrehzahl zu klein ist, schaltet die Ansteuereinheit 5 die elektrische Maschine 3 in den Motorbetrieb.

Bei der zweiten Ausführungsform kann also zeitweise Energie von der Welle 4 in die elektrische Maschine 3 eingespeist werden, und zeitweise kann Energie von der elektrischen Maschine 3 in die Welle 4 eingespeist werden. Dies ist in Fig. 4 daran zu erkennen, dass das von der elektrischen Maschine 3 bereitgestellte Drehmoment T2 positives Vorzeichen (Energieabgabe an die Welle 4) oder negatives Vorzeichen (Energieaufnahme von der Welle 4) haben kann.

## Patentansprüche

1. Verfahren zum Betreiben einer Antriebsanordnung für eine Welle, wobei die Antriebsanordnung eine Hubkolbenbrennkraftmaschie umfasst, die als Grossmotor (2) ausgestaltet ist, sowie eine elektrische Maschine (3), welches Verfahren die folgenden Schritte umfasst:
- Vorgeben einer Solldrehzahl für die Welle (4),
- Betreiben des Grossmotors (2) an einem vorgebbaren Lastpunkt,
- Erfassen der Istdrehzahl der Welle (4),
- Vergleichen der Solldrehzahl mit der Istdrehzahl, und
- Ansteuern der elektrischen Maschine (3) zum Kompensieren einer Abweichung der Istdrehzahl von der Solldrehzahl
**dadurch gekennzeichnet, dass** zumindest zeitweise Energie von der Welle in die elektrische Maschine (3) eingespeist wird, und in der elektrischen Maschine (3) in elektrische Energie umgewandelt wird.

2. Verfahren nach Anspruch 1, bei welchem an dem vorgebbaren Lastpunkt, bei welchem der Grossmotor (2) betrieben wird, die Abweichung der Istdrehzahl von der Solldrehzahl nur mittels der elektrischen Maschine (3) kompensiert wird.

3. Verfahren nach einem der vorangehenden Ansprüche, bei welchem der Lastpunkt des Grossmotors (2) so festgelegt wird, dass das vom Grossmotor (2) generierte Drehmoment grösser ist als das für die Solldrehzahl benötigte Drehmoment.

4. Verfahren nach einem der vorangehenden Ansprüche, bei welchem die von der elektrischen Maschine (3) generierte elektrische Energie einer Speichereinheit (7) oder einem Versorgungsnetz zugeführt wird.

5. Verfahren nach einem der vorangehenden Ansprüche, bei welchem die Drehzahl der Welle (4) mittels der elektrischen Energie geregelt wird, die aus der elektrischen Maschine (3) abgeführt wird.

6. Verfahren nach einem der vorangehenden Ansprüche, bei welchem zumindest zeitweise Energie von der elektrischen Maschine (3) in die Welle (4) eingespeist wird, um die Drehzahl der Welle (4) zu erhalten.

7. Verfahren nach einem der vorangehenden Ansprüche, bei welchem die elektrische Maschine (3) derart angesteuert wird, dass von der Welle (4) Energie in die elektrische Maschine (3) eingespeist wird, falls die Istdrehzahl der Welle (4) grösser ist als die Solldrehzahl, und dass von der elektrischen Maschine (3) Energie in die Welle (4) eingespeist wird, falls die Istdrehzahl der Welle (4) kleiner ist als die Solldrehzahl.

8. Antriebsanordnung umfassend eine Welle (4), eine Hubkolbenbrennkraftmaschie, die als Grossmotor (2) ausgestaltet ist, eine elektrische Maschine (3), und eine Ansteuereinheit (5), wobei der Grossmotor (2) antriebsverbunden mit der Welle (4) ist, **dadurch gekennzeichnet, dass** die Ansteuereinheit (5) derart ausgestaltet ist, dass sie die Antriebsanordnung (1) nach einem Verfahren gemäss einem der vorangehenden Ansprüche betreibt.

9. Antriebsanordnung nach Anspruch 8, wobei die elektrische Maschine (3) derart ausgestaltet ist, dass sie von einem Generatorbetrieb in einen Motorbetrieb umschaltbar ist und umgekehrt.

10. Antriebsanordnung nach einem der Ansprüche 8-9, bei welcher die elektrische Maschine (3) über ein Getriebe (10) mit der Welle (4) verbunden ist.

11. Antriebsanordnung nach einem der Ansprüche 8-9, bei welcher die elektrische Maschine (3) unmittelbar auf der Welle (4) angeordnet ist.

12. Antriebsanordnung nach einem der Ansprüche 8-11, mit einer Speichereinheit (7) für elektrische Energie, wobei die Speichereinheit (7) mit der elektrischen Maschine (3) verbunden ist.

13. Antriebsanordnung nach einem der Ansprüche 8-12, wobei der Grossmotor (2) als längsgespülter Grossmotor (2) ausgestaltet.

14. Antriebsanordnung nach einem der Ansprüche 8-13, wobei der Grossmotor (2) als längsgespülter Zweitakt-Grossdieselmotor ausgestaltet ist.

15. Antriebsanordnung nach einem der Ansprüche 8-14, wobei der Grossmotor (2) als Dual-Fuel Grossdieselmotor ausgestaltet ist, der in einem Flüssigmodus betreibbar ist, in welchem ein flüssiger Brennstoff zur Verbrennung in einen Brennraum eingebracht wird, und der ferner in einem Gasmodus betreibbar ist, in welchem ein Gas als Brennstoff in den Brennraum eingebracht wird.
